# EUROPEAN PATENT SPECIFICATION

(11) **EP 1 462 284 B1**
(45) Date of publication and mention of the grant of the patent: **20.09.2006**
(21) Application number: 04380065.5
(22) Date of filing: 25.03.2004
(51) Int. Cl.: B60J 1/08, B62D 25/02, E05B 65/20, B60J 5/04

(54) **Body with quarter windows for automotive vehicles**
Karosserie mit hinteren Seitenfenstern für Kraftfahrzeuge
Carrosserie avec vitres de custode pour véhicules automobiles

(30) Priority: 25.03.2003 ES 200300741; 26.03.2003 ES 200300757
(43) Date of publication of application: 29.09.2004
(73) Proprietor: Seat, S.A., 08040 Barcelona (ES)
(72) Inventor: Colet Gali, Joan, 08760 Martorell Barcelona (ES); Tomas Blazquez, Sergio, 08760 Martorell Barcelona (ES)
(74) Representative: Davila Baz, Angel

(56) References cited:
- DE-A1- 2 348 794
- DE-U1- 29 712 859
- US-A- 4 688 847

## Description

The present invention refers to a body for automotive vehicles, and more specifically to a body comprising on each side, after the rear door and in extension of the window of said door, a window located in the fixed rear area of the body.

The existence of said rear window is normal in vehicle bodies for the purpose of enlarging the area of vision of the interior, especially of the rear seats. In current vehicles, this window located in the rear part of the body, which is called quarter window, comprises a transparent surface surrounded in the entire contour by a profile or attachment molding. When the rear door is closed, the front span of the profile or molding, which is suitable for the assembly of the transparent element of the quarter window, is placed against the door, such that the rear door window and the quarter window are separated by the contour of said door, which rearwardly limits the window thereof, and by the profile or molding limiting the front part of the transparent portion of the rear window.

The constitution set forth obliges reducing the transparent surface of the quarter window and, on the other hand, implies the existence of a wide separation between the rear door window and the quarter window, which creates discontinuity in the line of the body.

It would therefore be advantageous to increase the amplitude or surface of the quarter window or transparent area of the rear window, to reduce the width of the opaque elements separating the rear door window and the fixed window or quarter window, and to achieve greater continuity in the line of the vehicle, allowing the obtainment of a sportier and more dynamic look thereof.

The purpose of the invention is to achieve hiding the rear door operating handle, which cooperates in the improvement of the look of the line of the vehicle.

According to the present invention, the transparent surface of the rear window has from the edge adjacent to the rear door, a recess facing a housing which said rear door has from its free edge and behind the visible surface thereof, in which housing a handle for opening the door is assembled, which can be accessed through the passage defined by said recess.

The features set forth and the advantages derived therefrom are explained below in greater detail with the aid of the attached drawings, which show a non-limiting embodiment.

In the drawings:
Figure 1 shows a partial side view of a body of a vehicle, showing part of the rear door, in a closed position, and the fixed window located after said door.
Figure 2 shows a view similar to Figure 1, with the door open.
Figure 3 shows a cross-sectional view of one side of the body, taken along section line III-III of Figure 1.
Figure 4 shows a sectional view similar to Figure 3, taken along section line IV-IV of Figure 1.
Figure 5 shows a sectional view taken along section line V-V of Figure 1.

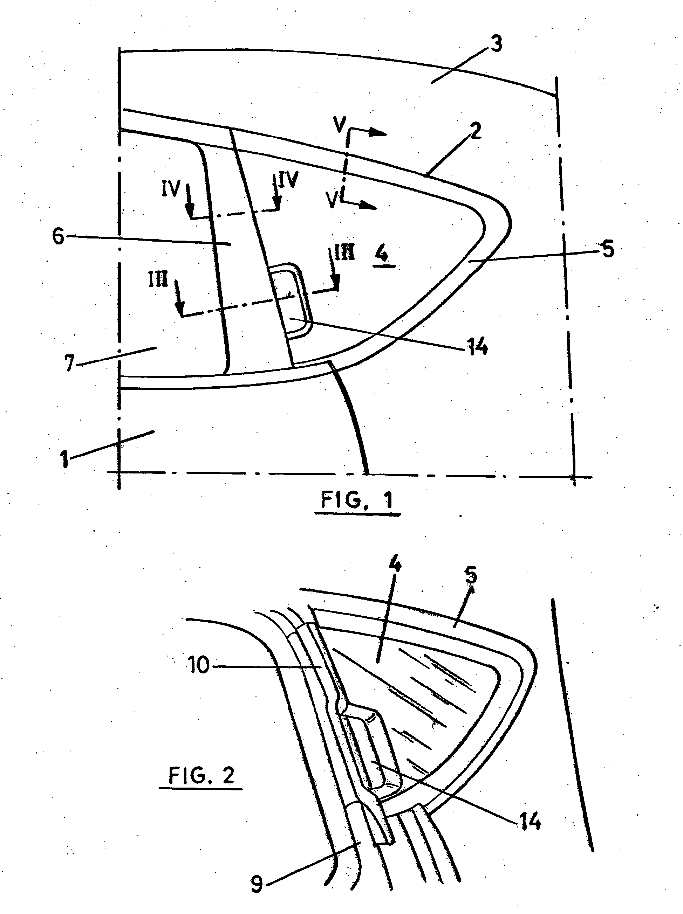

Figure 1 corresponds to a partial side view of a body of a vehicle, including part of the rear door 1, after which a window 2 situated already in the fixed area of the body 3 is located.

The cavity of the fixed window 2 is closed by a piece of transparent material 4, called the quarter window, preferably of a plastic material, reaching as far as the front edge of the opening of the window 2, therefore in the closed position of the door 1, said quarter window is limited by said door and more specifically by the profile 6 or divider rearwardly limiting the window 7 of this door 1.

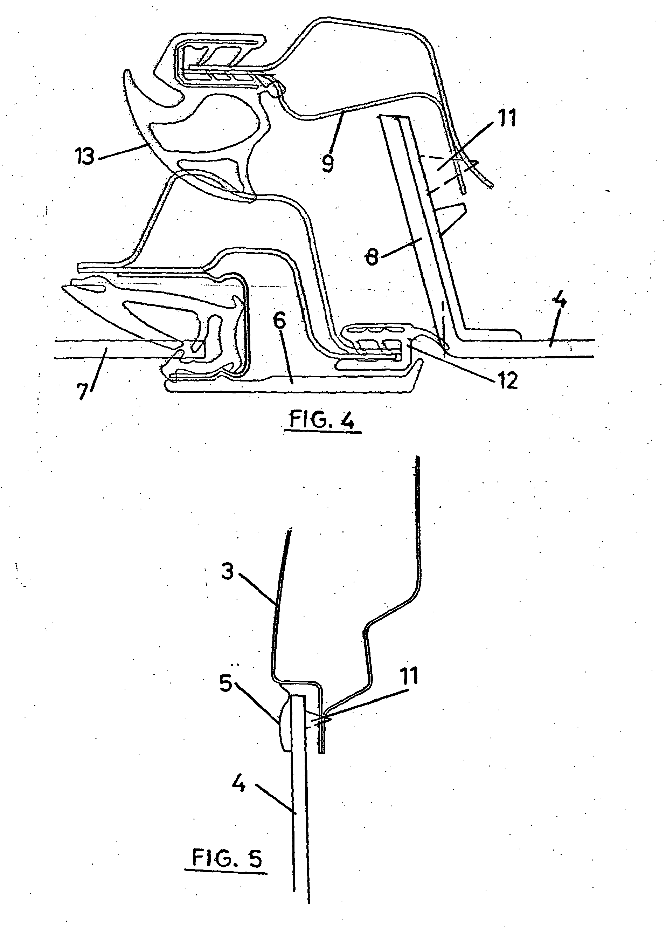

As can be seen in Figures 1 and 5, the piece of plastic material 4 or quarter window is assembled on the body 3 by its rear edges by means of a molding 5. This part 4 is finished off at its front edge with a flap 8 fixed to the frame 9 of the opening of the rear door by means of any traditional system, for example by means of a molding 10, Figure 2, by bonding 11, Figure 4, by riveting, by screwing, etc.

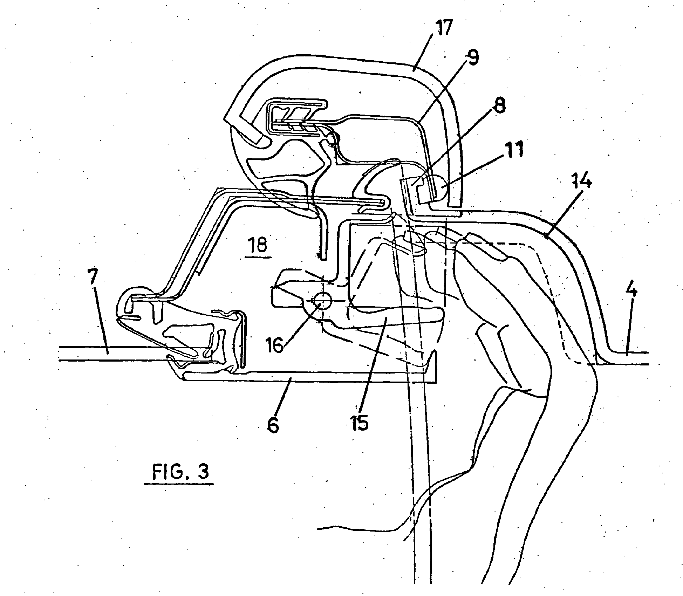

With the rear door 1 closed, support of the interior molding 12 of the divider 6 on the quarter window will occur, and support of the molding 13 finishing off the frame 9 of the cavity of the door against said door will occur, as can be seen in Figures 3 and 4.

An extension of the transparent surface 4 to the door 1 is thus obtained, thereby increasing the area of visibility while at the same time reducing the separation between the window 4 and window 2, since the profile or molding adjacent to the divider 6 which usually limits the rear window 2 in automotive vehicles disappears.

According to another feature of the invention, in the transparent area or quarter window 4 of the rear window, a recess 14 is formed, located in a position adjacent to the divider 6, dimensioned so as to allow introducing a hand for the purpose of accessing a handle 15, Figure 3, for operating the lock, which is assembled behind the divider 6 and is thus hidden from view. This recess 14 is externally finished off by the flap 8 fixed to the frame 9 of the cavity of the door in the manner already described.

The handle 15 is located in the housing 18 defined behind the divider 6, hidden by said divider and is assembled on a noticeably vertical pivot shaft 16, as can be seen in Figure 3. The handle 15 is responsible for operating a lever or rod which will act on the door latch mechanism, all this in a known manner.

As can be seen in Figure 2, when the door is open, the cavity or recess 8 opens out frontally on the contour of the cavity 10 of the rear door.

All in all, the invention allows extending the transparent surface 4 of the rear window on the side sealing with the rear door 1, eliminating the front span of the molding 2 which, in any case, is moved to the frame 9 of the cavity of the door 1 by means of the flap 8. Thus, in the closed position of the door of Figure 1, the width of the opaque elements separating the window 7 from the transparent area 4 of the rear window are drastically reduced and a larger transparent area is achieved which, together with hiding the handle 15 for operating the lock under the divider 6, provides a four-door vehicle with a much sportier and more dynamic look, since the rear door is hidden as much as possible, practically making it disappear.

The transparent area or quarter window 4 can be made of a plastic material, whereupon the edge defining the edge adjacent to the door 1 can have a minimum radius, which provides the door-quarter window meeting zone with an ideal look.

A further advantage of the constitution of the area 4 based on plastic material is that it allows for carrying out the depression 14 such that it is in a position adjacent to the span 6 of the door, thus allowing access to the movable plate or handle 15 for opening the door, located on the frame thereof and hidden under the divider 6.

The housing in which the plate or handle 15 is assembled is formed in the door 1 from the free edge thereof, behind the visible surface which, in the example shown in the drawings, is defined in this specific area by a profile 6, for example of a plastic material, and which can be fixed to the frame and case of the door by means of screws, rivets or pins, above and below the area occupied by the cavity housing the handle 15.

The internal covering 17 finishing off the area of the rear window 5 can also be seen in Figure 3.

## Claims

1. A body for automotive vehicles, comprising on each side a rear door and, after the rear door (1) and in extension of the window (7) of said door, a window (4) located in the fixed rear area of said body, wherein the transparent surface of said window (4) reaches as far as the front edge of said rear area, and when the door (1) is closed, said window is limited by the rear profile (6) of the rear door (1), **characterized in that** said transparent surface has, from the edge adjacent to the rear door, a recess (14) facing a housing (18) which said rear door has, from its free edge and behind the visible surface (6) thereof, in which housing a handle (15) for opening the door is assembled, which can be accessed through the passage defined by said recess (14).

## Patentansprüche

1. Karosserie für Kraftfahrzeuge, die auf jeder Seite eine Hintertür und nach der Hintertür (1) und als Verlängerung des Fensters (7) dieser Tür ein Fenster (4) aufweist, das in dem festen hinteren Bereich der Karosserie angeordnet ist, wobei die transparente Fläche des Fensters (4) so weit wie der vordere Rand des hinteren Bereichs reicht und dieses Fenster, wenn die Tür (1) geschlossen ist, von dem hinteren Profil (6) der Hintertür begrenzt wird, **dadurch gekennzeichnet, dass** die transparente Fläche von dem Rand angrenzend an die Hintertür aus eine Aussparung (14) hat, die einem Gehäuse (18), das die Hintertür hat, von ihrem freien Rand aus und hinter der sichtbaren Fläche (6) davon zugewandt ist, wobei in dem Gehäuse ein Handgriff (15) zum Öffnen der Tür angeordnet ist, der durch den durch die Aussparung (14) gebildeten Durchlass zugänglich ist.

## Revendications

1. Corps pour véhicules automobiles comprenant, de chaque côté, une porte arrière et, après la portière arrière (1) et dans le prolongement de la fenêtre (7) de ladite porte, une fenêtre (4) située dans la zone arrière fixe dudit corps, dans lequel la surface transparente de ladite fenêtre (4) atteint le bord avant de ladite zone arrière et lorsque la portière (1) est fermée, ladite fenêtre est limitée par le profilé arrière (6) de la portière arrière (1), **caractérisé en ce que** ladite surface transparente présente, à partir du bord adjacent à la portière arrière, une dépression (14) face à un logement (18) de ladite portière arrière, à partir de son bord libre et derrière sa surface visible (6), dans lequel est assemblée une poignée (15) permettant d'ouvrir la portière, qui est accessible à travers le passage défini par ladite dépression (14).
